# EUROPEAN PATENT APPLICATION

(11) **EP 4 311 354 A1**
(43) Date of publication of application: **24.01.2024**
(21) Application number: 22778455.0
(22) Date of filing: 02.03.2022
(51) Int. Cl.: H04W 72/12, H04L 5/00

(54) **RESOURCE DETERMINATION METHOD AND APPARATUS**

(30) Priority: 01.04.2021 CN 202110353465
(71) Applicant: Huawei Technologies Co., Ltd., Longgang Shenzhen, Guangdong 518129 (CN)
(72) Inventor: JIAO, Shurong, Shenzhen, Guangdong 518129 (CN); HUA, Meng, Shenzhen, Guangdong 518129 (CN); GAO, Fei, Shenzhen, Guangdong 518129 (CN); GUAN, Lei, Shenzhen, Guangdong 518129 (CN)
(74) Representative: Gill Jennings & Every LLP
(86) International application number: PCT/CN2022/078846
(87) International publication number: WO 2022/206271

(57) **Abstract**

This application provides a resource determining method and an apparatus. The method includes: receiving configuration information of a PDCCH candidate set, where the PDCCH candidate set transmits a first PDCCH, the PDCCH candidate set corresponds to a first resource, the PDCCH candidate set includes a first PDCCH candidate group and a second PDCCH candidate group, the first PDCCH candidate group includes a first PDCCH candidate, the second PDCCH candidate group includes a plurality of second PDCCH candidates, and a resource corresponding to a target first PDCCH candidate in the first PDCCH candidate group and a resource corresponding to a target second PDCCH candidate in the second PDCCH candidate group have a first overlapping part; receiving a first PDCCH, where the first PDCCH indicates a second resource available for a first PDSCH, and the first resource and the second resource have a second overlapping part; and receiving the first PDSCH on a resource obtained by removing the second overlapping part from the second resource, thereby improving PDSCH transmission reliability.

## Description

This application claims priority to Chinese Patent Application No. 202110353465.5, filed with the China National Intellectual Property Administration on April 1, 2021 and entitled "RESOURCE DETERMINING METHOD AND APPARATUS", which is incorporated herein by reference in its entirety.

### TECHNICAL FIELD

This application relates to the wireless communication field, and more specifically, to a resource determining method and apparatus.

### BACKGROUND

In a wireless communication system, an access network device may send configuration information of a control resource set (control resource set, CORESET) and a search space set to a terminal device. The terminal device may determine, based on the configuration information, resources available for a physical downlink control channel (physical downlink control channel, PDCCH) and a possible resource location of the PDCCH in these available resources, that is, a PDCCH candidate. The access network device may transmit downlink control information (downlink control information, DCI) on one or more PDCCH candidates, and the DCI may indicate a resource available for a physical downlink shared channel (physical downlink shared channel, PDSCH).

To improve spectral efficiency, if resources in the CORESET may not be used to send the PDCCH or only some of the resources are used to send the PDCCH, and resources available for the PDSCH overlap the resources in the CORESET, the resources in the CORESET may be used to send the PDSCH.

However, when resources corresponding to the PDCCH candidates that carry different DCI overlap, a terminal device may be confused, and cannot determine a real resource location of the PDCCH. Consequently, a resource used to transmit the PDSCH cannot be accurately determined, and PDSCH transmission reliability is affected.

### SUMMARY

This application provides a resource determining method and apparatus, to improve PDSCH transmission reliability.

According to a first aspect, a resource determining method is provided. The method may be performed by a terminal device or a chip used for a terminal device, and the method includes: receiving configuration information of a physical downlink control channel (physical downlink control channel, PDCCH) candidate set, where the PDCCH candidate set is used to transmit a first PDCCH, the PDCCH candidate set corresponds to a first resource, the PDCCH candidate set includes a first PDCCH candidate group and a second PDCCH candidate group, the first PDCCH candidate group includes at least one first PDCCH candidate, the second PDCCH candidate group includes two or more second PDCCH candidates, and a resource corresponding to at least one target first PDCCH candidate in the first PDCCH candidate group and a resource corresponding to at least one target second PDCCH candidate in the second PDCCH candidate group have a first overlapping part; receiving the first PDCCH, where the first PDCCH is used to indicate a second resource available for a first physical downlink shared channel (physical downlink shared channel, PDSCH), and the first resource and the second resource have a second overlapping part; and receiving the first PDSCH on a target resource, where the target resource is a resource obtained by removing the second overlapping part from the second resource.

In this application, when the first PDCCH candidate group and the second PDCCH candidate group received by the terminal device have overlapping PDCCH candidates, all PDCCH candidates, that may cause confusion, in the first PDCCH candidate group and the second PDCCH candidate group are considered, and when receiving a PDSCH, the terminal device avoids resources corresponding to all PDCCH candidates in the PDCCH candidate set, thereby improving PDSCH transmission reliability.

With reference to the first aspect, in some implementations of the first aspect, the method further includes: receiving a first demodulation reference signal (demodulation reference signal, DMRS) group, where a resource used by the first DMRS group and the second resource have a third overlapping part, and that the target resource is a resource obtained by removing the second overlapping part from the second resource includes: the target resource is a resource obtained by removing the second overlapping part and the third overlapping part from the second resource.

In this application, when resource mapping is performed on a PDSCH, in addition to all PDCCH candidates in the PDCCH candidate set that need to be avoided, a resource used by a received DMRS needs to be avoided, so as to ensure that no interference caused by the PDSCH is imposed on a resource of the DMRS, and further enhance performance of DMRS-based channel estimation.

With reference to the first aspect, in some implementations of the first aspect, the first DMRS group is a DMRS corresponding to the PDCCH candidate set.

In this application, when resource mapping is performed on a PDSCH, only the DMRS corresponding to the PDCCH candidate set may be avoided, so that resource utilization is improved while channel estimation performance is ensured.

With reference to the first aspect, in some implementations of the first aspect, the at least one target first PDCCH candidate and the at least one target second PDCCH candidate meet a first condition, and the first condition includes: a start control channel element (control channel element, CCE) has a same location, and a size or format of carried downlink control information DCI is the same.

With reference to the first aspect, in some implementations of the first aspect, the first condition further includes: corresponding to a same CCE, corresponding to a same control resource set (control resource set, CORESET for short), and having a same scrambling code sequence.

With reference to the first aspect, in some implementations of the first aspect, the first condition further includes: corresponding to a same CORESET, or having a same scrambling code sequence.

With reference to the first aspect, in some implementations of the first aspect, an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

In this application, it may be assumed that when the target first PDCCH candidate and the target second PDCCH candidate meet the first condition, the PDSCH avoids all PDCCH candidates in the PDCCH candidate set during resource mapping, so that resource utilization can be improved while PDSCH transmission reliability is ensured.

With reference to the first aspect, in some implementations of the first aspect, the two or more second PDCCH candidates are used to transmit same DCI.

With reference to the first aspect, in some implementations of the first aspect, the first PDCCH candidate group includes two or more first PDCCH candidates used for transmitting same DCI.

In this application, a PDCCH candidate in a PDCCH candidate group may be used to transmit same DCI, so that in this application, PDSCH transmission reliability can be improved in a scenario where a PDCCH is repeatedly transmitted.

According to a second aspect, a resource determining method is provided. The method may be performed by an access network device or a chip used for an access network device, and the method includes: sending configuration information of a physical downlink control channel (physical downlink control channel, PDCCH) candidate set, where the PDCCH candidate set is used to transmit a first PDCCH, the PDCCH candidate set corresponds to a first resource, the PDCCH candidate set includes a first PDCCH candidate group and a second PDCCH candidate group, the first PDCCH candidate group includes at least one first PDCCH candidate, the second PDCCH candidate group includes two or more second PDCCH candidates, and a resource corresponding to at least one target first PDCCH candidate in the first PDCCH candidate group and a resource corresponding to at least one target second PDCCH candidate in the second PDCCH candidate group have a first overlapping part; sending the first PDCCH, where the first PDCCH is used to indicate a second resource available for a first physical downlink shared channel (physical downlink shared channel, PDSCH), and the first resource and the second resource have a second overlapping part; and sending the first PDSCH on a target resource, where the target resource is a resource obtained by removing the second overlapping part from the second resource.

In this application, when the first PDCCH candidate group and the second PDCCH candidate group received by the terminal device have overlapping PDCCH candidates, all PDCCH candidates, that may cause confusion, in the first PDCCH candidate group and the second PDCCH candidate group are considered, and when receiving a PDSCH, the terminal device avoids resources corresponding to all PDCCH candidates in the PDCCH candidate set, thereby improving PDSCH transmission reliability.

With reference to the second aspect, in some implementations of the second aspect, the method further includes: sending a first demodulation reference signal (demodulation reference signal, DMRS) group, where a resource used by the first DMRS group and the second resource have a third overlapping part, and that the target resource is a resource obtained by removing the second overlapping part from the second resource includes: the target resource is a resource obtained by removing the second overlapping part and the third overlapping part from the second resource.

With reference to the second aspect, in some implementations of the second aspect, the first DMRS group is a DMRS corresponding to the PDCCH candidate set.

With reference to the second aspect, in some implementations of the second aspect, the at least one target first PDCCH candidate and the at least one target second PDCCH candidate meet a first condition, and the first condition includes: a start control channel element (control channel element, CCE) has a same location, and a size or format of carried downlink control information DCI is the same.

With reference to the second aspect, in some implementations of the second aspect, the first condition further includes: corresponding to a same CCE, corresponding to a same control resource set (control resource set, CORESET for short), and having a same scrambling code sequence.

With reference to the second aspect, in some implementations of the second aspect, the first condition further includes: corresponding to a same CORESET, or having a same scrambling code sequence.

With reference to the second aspect, in some implementations of the second aspect, an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

With reference to the second aspect, in some implementations of the second aspect, the two or more second PDCCH candidates are used to transmit same DCI.

With reference to the second aspect, in some implementations of the second aspect, the first PDCCH candidate group includes two or more first PDCCH candidates used for transmitting same DCI.

According to a third aspect, a resource determining apparatus is provided. The apparatus may be a terminal device or a communication apparatus used for a terminal device. The apparatus includes a transceiver unit, and the transceiver unit is used for: receiving configuration information of a physical downlink control channel (physical downlink control channel, PDCCH) candidate set, where the PDCCH candidate set is used to transmit a first PDCCH, the PDCCH candidate set corresponds to a first resource, the PDCCH candidate set includes a first PDCCH candidate group and a second PDCCH candidate group, the first PDCCH candidate group includes at least one first PDCCH candidate, the second PDCCH candidate group includes two or more second PDCCH candidates, and a resource corresponding to at least one target first PDCCH candidate in the first PDCCH candidate group and a resource corresponding to at least one target second PDCCH candidate in the second PDCCH candidate group have a first overlapping part; receiving the first PDCCH, where the first PDCCH is used to indicate a second resource available for a first physical downlink shared channel (physical downlink shared channel, PDSCH), and the first resource and the second resource have a second overlapping part; and receiving the first PDSCH on a target resource, where the target resource is a resource obtained by removing the second overlapping part from the second resource.

In this application, when the first PDCCH candidate group and the second PDCCH candidate group received by the terminal device have overlapping PDCCH candidates, all PDCCH candidates, that may cause confusion, in the first PDCCH candidate group and the second PDCCH candidate group are considered, and when receiving a PDSCH, the terminal device avoids resources corresponding to all PDCCH candidates in the PDCCH candidate set, thereby improving PDSCH transmission reliability.

With reference to the third aspect, in some implementations of the third aspect, the transceiver unit is further used to receive a first demodulation reference signal (demodulation reference signal, DMRS) group, where a resource used by the first DMRS group and the second resource have a third overlapping part, and that the target resource is a resource obtained by removing the second overlapping part from the second resource includes: the target resource is a resource obtained by removing the second overlapping part and the third overlapping part from the second resource.

With reference to the third aspect, in some implementations of the third aspect, the first DMRS group is a DMRS corresponding to the PDCCH candidate set.

With reference to the third aspect, in some implementations of the third aspect, the at least one target first PDCCH candidate and the at least one target second PDCCH candidate meet a first condition, and the first condition includes: a start control channel element (control channel element, CCE) has a same location, and a size or format of carried downlink control information DCI is the same.

With reference to the third aspect, in some implementations of the third aspect, the first condition further includes: corresponding to a same CCE, corresponding to a same control resource set (control resource set, CORESET for short), and having a same scrambling code sequence.

With reference to the third aspect, in some implementations of the third aspect, the first condition further includes: corresponding to a same CORESET, or having a same scrambling code sequence.

With reference to the third aspect, in some implementations of the third aspect, an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

With reference to the third aspect, in some implementations of the third aspect, the two or more second PDCCH candidates are used to transmit same DCI.

With reference to the third aspect, in some implementations of the third aspect, the first PDCCH candidate group includes two or more first PDCCH candidates used for transmitting same DCI.

According to a fourth aspect, a resource determining apparatus is provided. The apparatus may be an access network device or a communication apparatus used for an access network device. The apparatus includes a transceiver unit, and the transceiver unit is used for: sending configuration information of a physical downlink control channel (physical downlink control channel, PDCCH) candidate set, where the PDCCH candidate set is used to transmit a first PDCCH, the PDCCH candidate set corresponds to a first resource, the PDCCH candidate set includes a first PDCCH candidate group and a second PDCCH candidate group, the first PDCCH candidate group includes at least one first PDCCH candidate, the second PDCCH candidate group includes two or more second PDCCH candidates, and a resource corresponding to at least one target first PDCCH candidate in the first PDCCH candidate group and a resource corresponding to at least one target second PDCCH candidate in the second PDCCH candidate group have a first overlapping part; sending the first PDCCH, where the first PDCCH is used to indicate a second resource available for a first physical downlink shared channel (physical downlink shared channel, PDSCH), and the first resource and the second resource have a second overlapping part; and sending the PDSCH on a target resource, where the target resource is a resource obtained by removing the second overlapping part from the second resource.

In this application, when the first PDCCH candidate group and the second PDCCH candidate group received by the terminal device have overlapping PDCCH candidates, all PDCCH candidates, that may cause confusion, in the first PDCCH candidate group and the second PDCCH candidate group are considered, and when receiving a PDSCH, the terminal device avoids resources corresponding to all PDCCH candidates in the PDCCH candidate set, thereby improving PDSCH transmission reliability.

With reference to the fourth aspect, in some implementations of the fourth aspect, the transceiver unit is further used to send a first demodulation reference signal (demodulation reference signal, DMRS) group, where a resource used by the first DMRS group and the second resource have a third overlapping part, and that the target resource is a resource obtained by removing the second overlapping part from the second resource includes: the target resource is a resource obtained by removing the second overlapping part and the third overlapping part from the second resource.

With reference to the fourth aspect, in some implementations of the fourth aspect, the first DMRS group is a DMRS corresponding to the PDCCH candidate set.

With reference to the fourth aspect, in some implementations of the fourth aspect, the at least one target first PDCCH candidate and the at least one target second PDCCH candidate meet a first condition, and the first condition includes: a start control channel element (control channel element, CCE) has a same location, and a size or format of carried downlink control information DCI is the same.

With reference to the fourth aspect, in some implementations of the fourth aspect, the first condition further includes: corresponding to a same CCE, corresponding to a same control resource set (control resource set, CORESET for short), and having a same scrambling code sequence.

With reference to the fourth aspect, in some implementations of the fourth aspect, the first condition further includes: corresponding to a same CORESET, or having a same scrambling code sequence.

With reference to the fourth aspect, in some implementations of the fourth aspect, an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

With reference to the fourth aspect, in some implementations of the fourth aspect, the two or more second PDCCH candidates are used to transmit same DCI.

With reference to the fourth aspect, in some implementations of the fourth aspect, the first PDCCH candidate group includes two or more first PDCCH candidates used for transmitting same DCI.

According to a fifth aspect, a communication apparatus is provided. The apparatus may include a processing unit, a sending unit, and a receiving unit. Optionally, the sending unit and the receiving unit may be alternatively a transceiver unit.

When the apparatus is an access network device, the processing unit may be a processor, and the sending unit and the receiving unit may be a transceiver. The apparatus may further include a storage unit, and the storage unit may be a memory. The storage unit is used to store instructions, and the processing unit executes the instructions stored in the storage unit, so that the decoding apparatus performs the method in the first aspect. When the apparatus is a chip in the decoding apparatus, the processing unit may be a processor, and the sending unit and the receiving unit may be an input/output interface, a pin, a circuit, or the like. The processing unit executes the instructions stored in the storage unit, so that the chip performs the method in the first aspect. The storage unit is used to store instructions. The storage unit may be a storage unit (for example, a register or a cache) in the chip, or may be a storage unit (for example, a read-only memory or a random access memory) that is in the decoding apparatus and that is outside the chip.

When the apparatus is a terminal device, the processing unit may be a processor, and the sending unit and the receiving unit may be a transceiver. The apparatus may further include a storage unit, and the storage unit may be a memory. The storage unit is used to store instructions, and the processing unit executes the instructions stored in the storage unit, so that the decoding apparatus performs the method in the first aspect. When the apparatus is a chip in the decoding apparatus, the processing unit may be a processor, and the sending unit and the receiving unit may be an input/output interface, a pin, a circuit, or the like. The processing unit executes the instructions stored in the storage unit, so that the chip performs the method in the first aspect. The storage unit is used to store instructions. The storage unit may be a storage unit (for example, a register or a cache) in the chip, or may be a storage unit (for example, a read-only memory or a random access memory) that is in the decoding apparatus and that is outside the chip.

According to a sixth aspect, a communication apparatus is provided, including a processor and an interface circuit. The interface circuit is used to: receive a signal from another communication apparatus other than the communication apparatus and transmit the signal to the processor, or send a signal from the processor to another communication apparatus other than the communication apparatus. The processor is used to implement, by using a logic circuit or executing a code instruction, the method in any one of the possible implementations according to the first aspect and the second aspect.

According to a seventh aspect, a read-only memory medium is provided. The read-only memory medium stores a computer program or instructions, and when the computer program or instructions are executed, the method in the first aspect or the second aspect is implemented.

According to an eighth aspect, a computer program product including an instruction is provided. When the instruction is executed, the method in any one of the possible implementations according to the first aspect or the second aspect is implemented.

According to a ninth aspect, a computer program is provided. The computer program includes code or an instruction. When the code or the instruction is executed, the method in any one of the possible implementations according to the first aspect or the second aspect is implemented.

According to a tenth aspect, a chip system is provided. The chip system includes a processor, and may further include a memory, used to implement the method in any one of the possible implementations according to the first aspect or the second aspect. The chip system may include a chip, or may include a chip and another discrete component.

According to an eleventh aspect, a communication system is provided. The communication system includes the apparatuses that are described in the third aspect and the fourth aspect.

### BRIEF DESCRIPTION OF DRAWINGS

FIG. 1 is a schematic diagram of an example of a resource determining method applicable to this application;
FIG. 2 is a schematic flowchart of an example of resource determining according to an embodiment of this application;
FIG. 3 is a schematic diagram of a target first PDCCH candidate and a target second PDCCH candidate;
FIG. 4 to FIG. 10 are schematic diagrams of possible target resources according to an embodiment of this application; and
FIG. 11 to FIG. 14 are schematic diagrams of structures of possible apparatuses according to an embodiment of this application.

### DESCRIPTION OF EMBODIMENTS

The following describes technical solutions of this application with reference to accompanying drawings.

The technical solutions provided in this application may be applied to various communication systems, for example, a Long Term Evolution (Long Term Evolution, LTE) system, an LTE frequency division duplex (frequency division duplex, FDD) system, an LTE time division duplex (time division duplex, TDD) system, a universal mobile communications system (universal mobile telecommunications system, UMTS), a worldwide interoperability for microwave access (worldwide interoperability for microwave access, WiMAX) communication system, a 5th generation (5th Generation, 5G) mobile communication system, a new radio access technology (new radio access technology, NR), and a future communication system. The 5G mobile communication system may work in non-standalone (non-standalone, NSA) mode and/or standalone (standalone, SA) mode.

The technical solutions provided in this application may be further applied to machine type communication (machine type communication, MTC), a Long Term Evolution-machine (Long Term Evolution-machine, LTE-M) technology, a device-to-device (device to device, D2D) network, a machine-to-machine (machine to machine, M2M) network, an Internet of Things (Internet of Things, IoT) network, a satellite communication network, or other networks. The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may also be applied to a future communication system, for example, a 6th generation (6th Generation, 6G) mobile communication system. This is not limited in this application.

In this embodiment of this application, an access network device may be any device having a wireless transceiver function. The device includes but is not limited to: an evolved NodeB (B (evolved NodeB, eNB)), a radio network controller (radio network controller, RNC), a NodeB (NodeB, NB), a home NodeB (for example, a home evolved NodeB, or a home NodeB, HNB), a baseband unit (baseband unit, BBU), a satellite, an unmanned aerial vehicle base station, an access point (access point, AP) in a wireless fidelity (wireless fidelity, Wi-Fi) system, a radio relay node, a radio backhaul node, a transmission point (transmission point, TP), or a transmission and reception point (transmission and reception point, TRP), or the like. For example, the device may be an NR, a gNB in a system, or a transmission point (TRP or TP), or one or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

An access network device serves a cell, and a terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell. The small cell herein may include a metro cell, a micro cell, a pico cell, a femto cell, and the like. These small cells have characteristics of small coverage and low transmit power, and are applicable to providing a high-rate data transmission service.

In embodiments of this application, the terminal device may also be referred to as user equipment (user equipment, LTE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or an on-board device. Currently, for example, some terminals may be: a mobile phone, a tablet computer, a computer (such as a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control, a wireless terminal in unmanned driving, a wireless terminal in telemedicine, a wireless terminal in a smart grid, a wireless terminal in transportation security, a wireless terminal in a smart city, a wireless terminal in a smart home, a cellular phone, a cordless phone, a Session Initiation Protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, an in-vehicle device, a wearable device, an unmanned aerial vehicle, a terminal device in a 5G network, a terminal device in a future evolved public land mobile network (public land mobile network, PLMN), a sensor such as a train detector, or the like.

The wearable device may also be referred to as a wearable intelligent device, and is a general term of wearable devices, such as glasses, gloves, watches, clothes, and shoes, that are developed through the application of wearable technologies to intelligent designs of daily wear. The wearable device is a portable device that can be directly worn on the body or integrated into clothes or an accessory of a user. The wearable device is not only a hardware device, but also implements a communication function through software support, data exchange, and cloud interaction.

In addition, the terminal device may alternatively be a terminal device in an internet of things (internet of things, IoT) system. IoT plays a crucial role in future information technology development. For example, a narrowband (narrow band, NB) technology can connect things to a network by using the communication technology, so as to implement an intelligent network of human-to-machine interconnection and machine-to-machine interconnection.

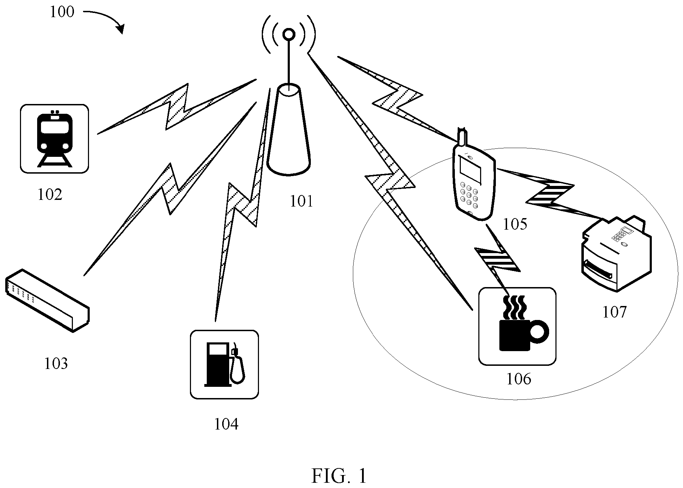

For ease of understanding of embodiments of this application, a communication system applicable to resource determining provided in the embodiment of this application is first described in detail with reference to FIG. 1. FIG. 1 is a schematic diagram of a communication system 100 to which a method according to an embodiment of this application is applicable. As shown in the figure, the communication system 100 may include at least one access network device such as an access network device 101 shown in FIG. 1. The communication system 100 may further include at least one terminal device such as terminal devices 102 to 107 shown in FIG. 1. The terminal devices 102 to 107 may be movable or fixed. The access network device 101 may communicate with one or more of the terminal devices 102 to 107 through a radio link. Each access network device may provide communication coverage for a specific geographical area, and may communicate with a terminal device located in the covered area. For example, an access network device may send configuration information to a terminal device, and the terminal device may send uplink data to the access network device based on the configuration information. For another example, an access network device may send downlink data to a terminal device. Therefore, the access network device 101 and the terminal devices 102 to 107 in FIG. 1 form a communication system.

Optionally, the terminal devices may directly communicate with each other. For example, the direct communication between the terminal devices may be implemented through a D2D technology, and the like. As shown in the figure, the terminal devices 105 and 106 may directly communicate with each other through the D2D technology, and the terminal devices 105 and 107 may directly communicate with each other by using the D2D technology. The terminal devices 106 and 107 may separately or simultaneously communicate with the terminal device 105.

The terminal devices 105 to 107 may also separately communicate with the access network device 101. For example, the terminal devices may directly communicate with the access network device 101. For example, the terminal device 105 and the terminal device 106 in FIG. 1 may directly communicate with the access network device 101; or the terminal device may indirectly communicate with the access network device 101, for example, the terminal device 107 in FIG. 1 communicates with the access network device 101 through the terminal device 105.

It should be understood that FIG. 1 shows an example of communication links between one access network device and a plurality of terminal devices, and communication links between communication devices. Optionally, the communication system 100 may include a plurality of access network devices, and a coverage area of each access network device may include another quantity of terminal devices, for example, more or fewer terminal devices. This is not limited in this application.

For the foregoing communication devices, for example, the access network device 101 shown in FIG. 1, the access network device 101 may send configuration information of a resource to the terminal device 102 shown in FIG. 1, and the terminal device 102 determines the resource according to the configuration information.

Optionally, a plurality of antennas may be configured for the access network device 101 and the terminal devices 102 to 107 shown in FIG. 1. The plurality of antennas may include at least one transmit antenna for sending signals and at least one receive antenna for receiving signals. In addition, each communication device further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving.

Optionally, the wireless communication system 100 may further include another network entity, such as a network controller or a mobility management entity. This is not limited in this embodiment of this application.

In the following, some terms in embodiments of this application are explained and described to help a person skilled in the art have a better understanding.

### (1) Control resource set (control resource set, CORESET)

A CORESET may be understood as a time-frequency resource set. In a time domain, a CORESET may be configured as one or several consecutive orthogonal frequency-division multiplexing (orthogonal frequency-division multiplexing, OFDM) symbols. In a frequency domain, a CORESET may be a group of consecutive or non-consecutive frequency domain resources. One CORESET may correspond to at least one search space. Configuration information used to configure the CORESET may include at least one of the following items: a CORESET identity (identity, ID) index, a demodulation reference signal (demodulation reference signal, DMRS) scrambling sequence initialization value, CORESET duration, a CORESET frequency domain resource bitmap, a mapping type (for example, non-interleaved mapping and interleaved mapping) from a control channel element (control channel element, CCE) to a resource element group (resource element group, REG), a size of a REG bundle, a cyclic shift value of a REG bundle interleaver, and a quasi co-location (quasi co-location, QCL) relationship with an antenna port, or an indicator that is in the DCI and that indicates whether a transmission configuration indicator (transmission configuration indicator, TCI) field exists.

### (2) Aggregation level

A quantity of CCEs included in a PDCCH is referred to as an aggregation level of the PDCCH. Different PDCCHs may use different CCE aggregation levels, that is, include different quantities of resource elements (resource elements, REs). For example, an access network device may select to use 1 CCE, 2 CCEs, 4 CCEs, 8 CCEs, or 16 CCEs to carry one PDCCH. A terminal device does not know which aggregation level is used by a PDCCH to be received, and attempts all possible cases. Different aggregation levels may be applicable to transmission of different DCI formats in different channel bandwidths and channel environments, to improve resource utilization. A proportional relationship between a DCI size and a PDCCH size reflects coding efficiency. On a premise that a quantity of DCI bits is fixed, the lower the coding efficiency (bit rate = code element/code length), the more the incremental redundancy, the longer the code length, and the better the coding robustness. This requires a resource with a high aggregation level for carrying and is suitable for users with poor radio channel conditions. If radio channel environments of the users are good, a high code rate and a low aggregation level may be used to save resources and improve resource utilization.

### (3) Search space

A total quantity of PDCCH candidates in each search space may be determined based on an aggregation level of the search space and a quantity of PDCCH candidates at each aggregation level. Each search space generally includes PDCCH candidates corresponding to a given aggregation level, or may be understood as a PDCCH candidate set used for blindly detecting DCI_format of a format. A sum of search space corresponding to a plurality of aggregation levels is referred to as a search space set. Search space used to detect common control information may be referred to as common search space, and search space used to detect user-specific control information is user-specific search space.

### (4) PDCCH candidate

A PDCCH candidate may be considered as a resource location where a PDCCH may appear. For example, in a LTE-specific search space, a CCE aggregation level is taken from 1 in ascending order. When one CCE is read at a start position of the UE-specific search space, this CCE is a PDCCH candidate. Rate de-matching and decoding are performed on the read data, and then the obtained data is descrambled through a radio network temporary identity (radio network temporary identity, RNTI) and checked through cyclic redundancy check (cyclic redundancy check, CRC). Only when the CRC check succeeds, a terminal device knows that the PDCCH is required by the terminal device, and further obtains DCI content through parsing.

### (5) Blind detection

According to different purposes and content, DCIs are divided into many formats and scrambled through different RNTIs, for example, a random access RNTI (random access-RNTI, RA-RNTI) and a paging RNTI (paging-RNTI, P-RNTI). PDCCH information of different terminal devices is distinguished according to cell RNCI (cell-RNTI, C-RNTI) information corresponding to the terminal devices. In other words, CRC of DCI is masked according to a C-RNTI. An access network device configures, for the access network device through higher layer signaling, for example, radio resource control (radio resource control, RRC) signaling, a PDCCH candidate set whose DCI needs to be monitored. The access network device does not know in advance which PDCCH candidate or which PDCCH candidates a terminal device receives the DCI, but the terminal device knows, according to configuration information of the access network device, which DCI the terminal device currently expects to receive. Therefore, the terminal device needs to attempt to decode each PDCCH candidate in the set according to the configuration information, that is, the terminal device performs CRC check on information of a PDCCH candidate by using a corresponding RNTI. If the CRC check succeeds, the terminal device knows the PDCCH candidate on which DCI can be obtained. A behavior that a terminal device attempts to decode each PDCCH candidate to determine whether a corresponding DCI is received is referred to as blind detection (blind detection, BD). Table 1 respectively lists application scenarios, obtaining methods, effective ranges, and whether to relate to a terminal device/card device of a RA-RNTI, a temporary C-RNTI (temporary C-RNTI, T-C RNTI), and a system information RNTI (system information RNTI, SI-RNTI).

**Table 1:**

| Identity Type | Application Scenario | Obtaining Method | Effective Range | Related to Terminal/Card Device |
|---|---|---|---|---|
| RA-RNTI | Indicate to receive a random access response message in random access | Obtain a value through calculation according to an occupied time-frequency resource (0001 to 003C) | In a cell | No |
| T-C RNTI | C-RNTI before contention resolution in random access | The eNodeB sends a random access response message (003D to FFF3) to a terminal | In a cell | No |
| C-RNTI | Used to identify a UE in the RRC_connect state | Obtain a value during initial access (when T-CRNTI is upgraded to C-RNTI) (003D to FFF3) | In a cell | No |
| P-RNTI | Paging | FFFE (fixed identifier) | Same on an entire network | No |
| SI-RNTI | System broadcast | FFFF (fixed identifier) | Same on an entire network | No |

### (6) PDCCH repetition

To improve PDCCH receiving performance, an access network device may use a PDCCH repetition transmission technology. There are a plurality of methods for PDCCH repetition transmission, and a PDCCH carrying same DCI may be sent for a plurality of times at different time points, at different frequencies, or by using different beams, so as to obtain a diversity gain and/or a combination gain. In addition, PDCCHs carrying same DCI may also be simultaneously sent to one terminal device by using a plurality of sending stations, that is, the PDCCHs carrying the same DCI are sent for a plurality of times by using different beams.

For PDCCH repetition transmission, a terminal device may receive a PDCCH in a plurality of manners. Using two times of repetition transmission as an example, when receiving a PDCCH, a terminal device may independently decode a single PDCCH candidate, or may combine and then decode a plurality of PDCCH candidates that are repeatedly transmitted. Using two times of repetition transmission as an example, it may be assumed that a PDCCH candidate group {a PDCCH candidate #1a, a PDCCH candidate #1b} is used to transmit same DCI:
Receiving solution 1: Decoding is performed only on combined information of the PDCCH candidate #1a and the PDCCH candidate #1b.
Receiving solution 2: Decoding is performed on the PDCCH candidate #1a, and decoding is performed on the PDCCH candidate #1b, provided that one of the two is correctly decoded.
Receiving solution 3: Decoding is performed on the PDCCH candidate #1a, and decoding is performed on combined information of the PDCCH candidate #1a and the PDCCH candidate #1b, provided that one of the two is correctly decoded.
Receiving solution 4: Decoding is performed on the PDCCH candidate #1a, decoding is performed on the PDCCH candidate #1b, and decoding is performed on combined information of the PDCCH candidate #1a and the PDCCH candidate #1b, provided that one of the three is correctly decoded.

### (7) Broadband DMRS configuration

Generally, a precoding matrix used for sending a CORESET is configured according to a parameter precoding granularity (precoderGranularity). There are generally two configuration manners: sameAsREG-bundle and allContiguousRBs. sameAsREG-bundle indicates that a granularity of the precoding matrix used when the CORESET is sent is a REG-bundle level, and allContiguousRBs indicates that if the CORESET includes several segments of consecutive frequency domain resources in a frequency domain, a same precoding matrix is used on each segment of the consecutive resources. For CORESETs with a same precoding matrix, when channel estimation is performed according to a DMRS, a smooth filtering operation may be performed through comprehensive consideration of all DMRSs in this part, thereby improving channel estimation performance.

### (8) PDSCH rate matching pattern

Rate matching refers to that a bit on a transmission channel is repeated or punctured to match a bearer capability of a physical channel, and a bit rate required for a transmission format is reached during channel mapping. A PDSCH rate matching pattern may be understood as a PDSCH resource mapping pattern, and may indicate a resource block on which an access network device performs rate matching and a resource block on which a terminal device performs rate de-matching. A terminal device may obtain a PDSCH rate matching pattern according to configuration information of a CORESET, configuration information of a search space, configuration information of a rate matching pattern, and the like.

### (9) Confusion problem

A terminal device obtains a location of a PDCCH candidate according to configuration information of a CORESET and configuration information of a search space, and performs blind detection on the PDCCH candidate. It is assumed that a PDCCH is successfully obtained through decoding at a resource location, but a plurality of PDCCH candidates overlap at the resource location, and a PDCCH candidate in the plurality of PDCCH candidates is used to transmit a PDCCH for which repetition transmission is configured. In this case, the terminal device cannot determine whether repetition transmission is configured for the obtained PDCCH, and therefore cannot determine a resource that is actually used by the PDCCH. In other words, the terminal device encounters a confusion problem. If an available PDSCH resource indicated by the obtained PDCCH overlaps a resource corresponding to a PDCCH candidate, the terminal device may receive the PDSCH on the resource used by the PDCCH. Because the terminal device cannot accurately determine a resource used to transmit the PDSCH, PDSCH transmission reliability is degraded. For example, when a confusion problem occurs, a terminal device and an access network device have different understandings of a rate matching pattern used during resource mapping on a PDSCH, and consequently the terminal device cannot accurately receive the PDSCH. The following describes a case in which a confusion problem occurs.

For two times of repetition transmission, it is assumed that a PDCCH candidate group {PDCCH candidate #1a, PDCCH candidate #1b} is used to transmit {PDCCH #1a, PDCCH #1b}; and for single transmission in which repetition transmission is not configured, it is assumed that a PDCCH candidate group {PDCCH candidate #2} is used to transmit {PDCCH #2}, where the PDCCH candidate #1a and the PDCCH candidate #2 meet conditions for one-time blind detection:
corresponding to a same CCE, that is, having a same aggregation level and a same start CCE location;
having a same scrambling code sequence;
corresponding to a same CORESET; and
carrying DCI of a same size.

It should be noted that, time-frequency resources corresponding to PDCCH candidates that meet the foregoing four conditions are completely the same, and a quantity of information bits of corresponding DCI is the same. Therefore, blind detection needs to be performed only once, and does not need to be performed separately. It may be understood that the foregoing conditions for performing one-time blind detection are merely an example. For example, one or more conditions may be deleted or changed. Specific content included in the conditions for one blind detection that need to be met by two PDCCH candidates is not limited in this application.

The following uses the receiving solution 2 as an example. Table 2 lists possible results of detection performed, according to the receiving solution 2, by a terminal device.

**Table 2:**

| | PDCCH candidate #1a (PDCCH candidate #2) | PDCCH candidate #1b | Sending | Receiving | |
|---|---|---|---|---|---|
| 1 | Decoding succeeded | Decoding succeeded | PDCCH #2 | No | |
| | | | {PDCCH #1a, PDCCH #1b} | Yes | |
| 2 | Decoding succeeded | Decoding failed | PDCCH #2 | Yes | Confusion scenario |
| | | | {PDCCH #1a, PDCCH #1b} | Yes | |
| 3 | Decoding failed | Decoding succeeded | PDCCH #2 | No | |
| | | | {PDCCH #1a, PDCCH #1b} | Yes | |
| 4 | Decoding failed | Decoding failed | PDCCH #2 | Yes | |
| | | | { PDCCH #1a, PDCCH #1b} | Yes | |

With reference to Table 2, the terminal device detects the PDCCH candidate #1a and the PDCCH candidate #1b. In a first possibility, the terminal device successfully decodes both the PDCCH candidate #1a and the PDCCH candidate #1b. In this case, the terminal device does not encounter confusion, and may determine that there is no possibility that an access network device sends PDCCH #2. In other words, the terminal device may determine that the access network device sends a PDCCH that is repeatedly transmitted, that is, {PDCCH #1a, PDCCH #1b}. However, in a second possibility, the terminal device successfully decodes the PDCCH candidate #1a, but fails to decode the PDCCH candidate #1b, and there is possibility that an access network device sends PDCCH #2 or {PDCCH #1a, PDCCH #1b}. In other words, the terminal device cannot determine whether the access network device sends {PDCCH #1a, PDCCH #1b} corresponding to {PDCCH candidate #1a, PDCCH candidate #1b} or the PDCCH #2 corresponding to PDCCH candidate #2.

The following further uses the receiving solution 3 as an example. Table 3 lists possible results of detection performed, according to the receiving solution 3, by a terminal device.

**Table 3:**

| | PDCCH candidate #1a (PDCCH candidate #2) | PDCCH candidate #1a PDCCH candidate #1b | Sending | Receiving | |
|---|---|---|---|---|---|
| 1 | Decoding succeeded | Decoding succeeded | PDCCH #2 | Yes | Confusion scenario |
| | | | {PDCCH #1a, PDCCH #1b} | Yes | |
| 2 | Decoding succeeded | Decoding failed | PDCCH #2 | Yes | Confusion scenario |
| | | | {PDCCH #1a, PDCCH #1b} | Yes | |
| 3 | Decoding failed | Decoding succeeded | PDCCH #2 | No | |
| | | | {PDCCH #1a, PDCCH #1b} | Yes | |
| 4 | Decoding failed | Decoding failed | PDCCH #2 | Yes | |
| | | | {PDCCH #1a, PDCCH #1b} | Yes | |

With reference to Table 3, the terminal device detects the PDCCH candidate #1a and the PDCCH candidate #1b. In a first possibility, the terminal device successfully decodes both the PDCCH candidate #1a and the PDCCH candidate #1b. In this case, there are both possibilities of sending the PDCCH #2 and sending {PDCCH #1a, PDCCH #1b} by an access network device, and the terminal device cannot determine whether the access network device sends {PDCCH #1a, PDCCH #1b}, or the PDCCH #2. Similarly, in the second scenario, the terminal device may also encounter confusion.

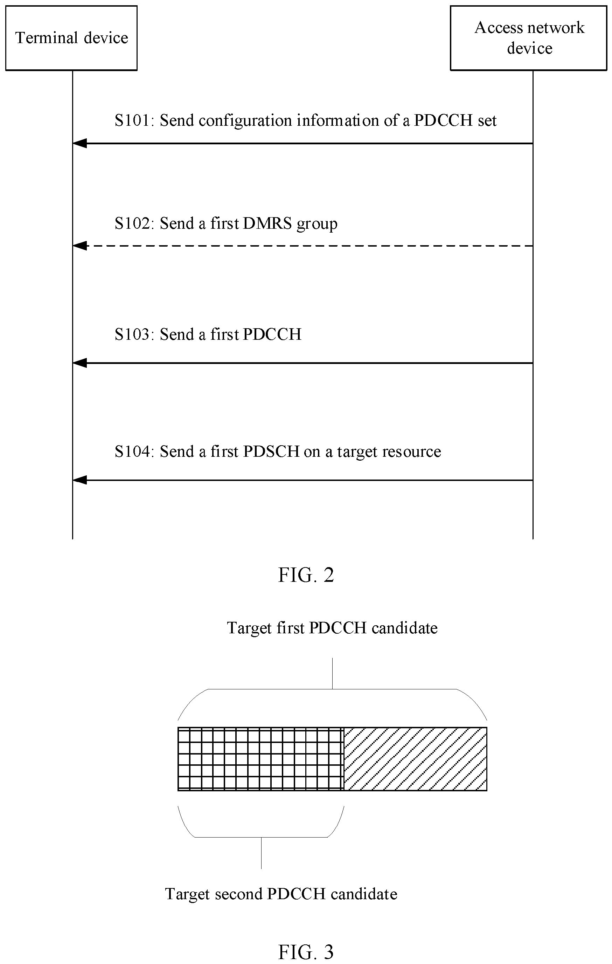

To improve PDSCH transmission reliability, FIG. 2 shows a resource determining method.

S101: An access network device sends configuration information of a PDCCH set to a terminal device, and correspondingly, the terminal device receives the configuration information of the PDCCH set from the access network device.

The PDCCH candidate set is for transmitting a first PDCCH. The PDCCH candidate set corresponds to a first resource. The PDCCH candidate set includes a first PDCCH candidate group and a second PDCCH candidate group. The first PDCCH candidate group includes at least one first PDCCH candidate. The second PDCCH candidate group includes two or more second PDCCH candidates. A resource corresponding to at least one target first PDCCH candidate in the first PDCCH candidate group and a resource corresponding to at least one target second PDCCH candidate in the second PDCCH candidate group have a first overlapping part.

The first resource includes resources corresponding to all PDCCH candidates in the PDCCH candidate set. Specifically, the first resource includes a resource corresponding to the first PDCCH candidate group and a resource corresponding to the second PDCCH candidate group. The resource corresponding to the first PDCCH candidate group includes resources corresponding to the at least one first PDCCH candidate, and the resource corresponding to the second PDCCH candidate group includes resources corresponding to the two or more second PDCCH candidates. In other words, the first resource includes resources corresponding to all first PDCCH candidates in the first PDCCH candidate group and resources corresponding to all second PDCCH candidates in the second PDCCH candidate group.

In a possible implementation, the configuration information may include CORESET configuration information and search space set configuration information. The CORESET configuration information is used to indicate a CORESET corresponding to the PDCCH candidate set, and the search space set configuration information is used to indicate a search space set corresponding to the PDCCH candidate set. The PDCCH candidate set may correspond to one or more CORESETs, and the one or more CORESETs are CORESETs that respectively correspond to at least one first PDCCH candidate and two or more second PDCCH candidates in the PDCCH candidate set. In other words, the at least one first PDCCH candidate and the two or more second PDCCH candidates may correspond to a same CORESET, or may correspond to different CORESETs.

Optionally, the PDCCH candidate set may correspond to one or more search space sets. In other words, the first PDCCH candidate group and the second PDCCH candidate group may correspond to a same search space set, or may correspond to different search space sets. Specifically, at least one first PDCCH candidate in the first PDCCH candidate group may belong to a same search space set, or may belong to different search space sets. Two or more second PDCCH candidates in the second PDCCH candidate group may belong to a same search space set, or may belong to different search space sets.

For example, the CORESET configuration information may include at least one of the following information: a CORESET identity, a CORESET frequency domain location, a quantity of OFDM symbols occupied by a CORESET, CCE-REG mapping information, a precoding granularity, TCI information, or a scrambling code identity.

For example, the search space set configuration information may include at least one of the following information: a search space identity, an associated CORESET identity, a monitoring period, a monitoring time domain location, a PDCCH candidate aggregation level and a corresponding quantity, or a DCI format.

In a possible implementation, the first PDCCH candidate group includes two or more first PDCCH candidates, and the two or more first PDCCH candidates are used to transmit same DCI. In other words, PDCCH repetition transmission is configured for PDCCHs corresponding to the two or more first PDCCH candidates, and a quantity of first PDCCH candidates in the first PDCCH candidate group may be understood as a quantity of times of PDCCH repetition transmission.

That PDCCH repetition transmission is performed twice (respectively PDCCH #1a and PDCCH #1b) is used as an example. The first PDCCH candidate group includes two first PDCCH candidates, which are respectively a PDCCH candidate #1a and a PDCCH candidate #1b. The two first PDCCH candidates are respectively configured to transmit the PDCCH #1a and the PDCCH #1b, and carry same DCI.

In a possible implementation, the first PDCCH candidate group includes a first PDCCH candidate, that is, the first PDCCH candidate is used to independently transmit DCI, and PDCCH repetition transmission is not configured for the PDCCH corresponding to the first PDCCH candidate.

In another possible implementation, two or more second PDCCH candidates in the second PDCCH candidate group are used to transmit same DCI. In other words, PDCCH repetition transmission is configured for PDCCHs corresponding to the two or more second PDCCH candidates, and a quantity of second PDCCH candidates in the second PDCCH candidate group may be understood as a quantity of times of PDCCH repetition transmission.

That the PDCCH repetition transmission is performed twice (respectively PDCCH #2a and PDCCH #2b) is used as an example. The second PDCCH candidate group includes two second PDCCH candidates, which are respectively a PDCCH candidate #2a and a PDCCH candidate #2b. The two second PDCCH candidates are respectively configured to transmit the PDCCH #2a and the PDCCH #2b, and carry same DCI.

It should be noted that, that the resource corresponding to the at least one target first PDCCH candidate in the first PDCCH candidate group and the resource corresponding to the at least one target second PDCCH candidate in the second PDCCH candidate group have the first overlapping part means that the resources completely overlap in a time domain and partially overlap in a frequency domain, or that the resources completely overlap in the time domain and also completely overlap in the frequency domain.

In a possible implementation, the at least one target first PDCCH candidate and the at least one target second PDCCH candidate meet a first condition.

For example, the first condition is determined according to a scrambling code sequence of the at least one target first PDCCH candidate, a scrambling code sequence of the at least one target second PDCCH candidate, a corresponding CORESET, or carried DCI.

In other words, different first conditions may be defined for different scenarios in which confusion may be caused. The following lists several cases of the first condition. It should be noted that the following lists only several cases that may be met by the target first PDCCH candidate and the target second PDCCH candidate, and other cases that may cause confusion also fall within a protection scope of this application.

For example, the first condition may include the following several cases.

### Case #1:

corresponding to a same CCE;
corresponding to a same CORESET;
having a same scrambling code sequence; and
carrying DCI of a same size or a same format.

The corresponding to a same CCE means having a same aggregation level and a same start CCE location, and may be understood as complete resource overlapping.

It should be noted that case #1 may further include a scenario in which the PDCCH is in a many-to-one or one-to-many mapping relationship. For example, in a possible case, the first PDCCH candidate group and the second PDCCH candidate group have a common PDCCH candidate. In this case, a target first PDCCH candidate in the first PDCCH candidate group and a target second PDCCH candidate in the second PDCCH candidate group are a same PDCCH candidate, and the condition in case #1 is met.

### Case #2

partial overlapping of corresponding resources;
same start CCE location;
carrying DCI of a same size or a same format; and
corresponding to a same CORESET, or having a same scrambling code sequence.

Optionally, when the corresponding to a same CORESET in the case #2 is met, a CORESET is configured as one symbol in a time domain, and a CCE-to-REG mapping type is configured as non-interleaved mapping.

For example, FIG. 3 shows a target first PDCCH candidate and a target second PDCCH candidate that meet the case #2. The aggregation level of the target first PDCCH candidate is 16, and the aggregation level of the target second PDCCH candidate is 8. Therefore, a resource corresponding to the target first PDCCH candidate partially overlaps a resource corresponding to the target second PDCCH candidate.

In this case, if an access network device sends a PDCCH at the aggregation level 16, a terminal device may successfully obtain DCI through decoding on the target second PDCCH candidate at the aggregation level 8. In other words, the terminal device may misunderstand that the access network device sends a PDCCH at the aggregation level 8. If a resource corresponding to a first PDCCH candidate overlaps a resource set available for the PDSCH that is configured by the access network device for the terminal device and the access network device notifies the terminal device, by using DCI, that the resource set is used to transmit scheduled downlink data, the terminal may misunderstand a rate matching pattern that is performed for the DCI by the scheduled downlink data, thereby affecting accuracy of decoding the scheduled downlink data.

In a possible implementation, the method further includes S102, where the access network device sends a first DMRS group to the terminal device, and correspondingly, the terminal device receives the first DMRS group from the access network device.

For example, if a CORESET configuration manner corresponding to a PDCCH candidate set is a wideband precoding matrix granularity, that is, if the parameter precoderGranularity is set to allContiguousRBs, the first DMRS group includes all DMRSs in the corresponding CORESET.

Optionally, the first DMRS group refers to DMRSs corresponding to the PDCCH candidate set.

The DMRSs corresponding to the PDCCH candidate set are a sum of DMRSs corresponding to all PDCCH candidates in the PDCCH candidate set. A DMRS corresponding to a PDCCH candidate refers to: if a configuration manner of a CORESET corresponding to the PDCCH candidate is a wideband precoding matrix granularity, that is, the parameter precoderGranularity is configured as allContiguousRBs, the DMRSs corresponding to the PDCCH candidate include all DMRSs in the CORESET corresponding to the PDCCH candidate; and if a CORESET configuration manner corresponding to a PDCCH candidate is not the wideband precoding matrix granularity, that is, the parameter precoderGranularity is configured as sameAsREG-bundle, the DMRSs corresponding to the PDCCH candidate include all DMRSs on the CCE occupied by the PDCCH candidate. Because a plurality of PDCCH candidates in a PDCCH candidate set may correspond to different CORESETs, different precoding matrix granularities may be configured for the different CORESETs.

For example, a PDCCH candidate set includes three PDCCH candidates, where two PDCCH candidates belong to a CORESET 1. Because a configuration manner of the CORESET 1 is not a wideband precoding matrix granularity, DMRSs corresponding to the two PDCCH candidates are a sum of DMRSs on CCEs respectively occupied by the two PDCCH candidates. In addition, a third PDCCH candidate belongs to a CORESET 2. Because a configuration manner of the CORESET 2 is a wideband precoding matrix granularity, DMRSs corresponding to the third PDCCH candidate are all DMRSs corresponding to the CORESET 2. In this case, a first DMRS group refers to a sum of DMRSs on CCEs respectively occupied by the two PDCCH candidates in the CORESET 1 plus all DMRSs in the CORESET 2 corresponding to the third PDCCH candidate.

When resources used by the first DMRS group overlap the resources that are configured by the access network device for the terminal device and that are available for a PDSCH, to ensure that the DMRS resources do not encounter interference caused by the PDSCH, the terminal device also needs to avoid the resources used by the first DMRS group when performing PDSCH resource mapping, thereby ensuring channel estimation performance.

S103: The access network device sends a first PDCCH to the terminal device, and correspondingly, the terminal device receives the first PDCCH from the access network device.

Optionally, the access network device sends a first PDCCH to the terminal device on at least one PDCCH candidate (a first PDCCH candidate and/or a second PDCCH candidate) in a PDCCH candidate set. For example, when a first PDCCH candidate group includes only one first PDCCH candidate and a second PDCCH candidate group includes two (a pair of) second PDCCH candidates, the access network device may send the first PDCCH by using the first PDCCH candidate or the pair of second PDCCH candidates. Correspondingly, the terminal device may receive the first PDCCH from the at least one PDCCH candidate, and a resource corresponding to the at least one PDCCH candidate belongs to a first resource.

A first PDCCH is used to indicate a second resource that is available for a first PDSCH, and the first resource and the second resource have a second overlapping part.

It should be noted that the first PDCCH may carry DCI, and the DCI may indicate an available resource of a PDSCH, that is, the second resource. The first resource and the second resource have the second overlapping part. It may be understood that the second resource overlaps a resource corresponding to the first PDCCH candidate group, and/or the second resource overlaps a resource corresponding to the second PDCCH candidate group. In addition, in a case where the second resource and resources in a CORESET corresponding to the PDCCH candidate set overlap, the resources in the CORESET may not be used to send a PDCCH, or only part of resources are used to send the PDCCH. In this case, the PDSCH may be sent through some resources that are in the resources in the CORESET and that are not used to send the PDCCH, thereby improving spectral efficiency.

S104: The access network device sends a first PDSCH to the terminal device on a target resource, and correspondingly, the terminal device receives the first PDSCH from the access network device on the target resource.

That the terminal device receives the first PDSCH on the target resource may include: performing, by the terminal device, descrambling, rate de-matching, decoding, and CRC check on the first PDSCH on the target resource.

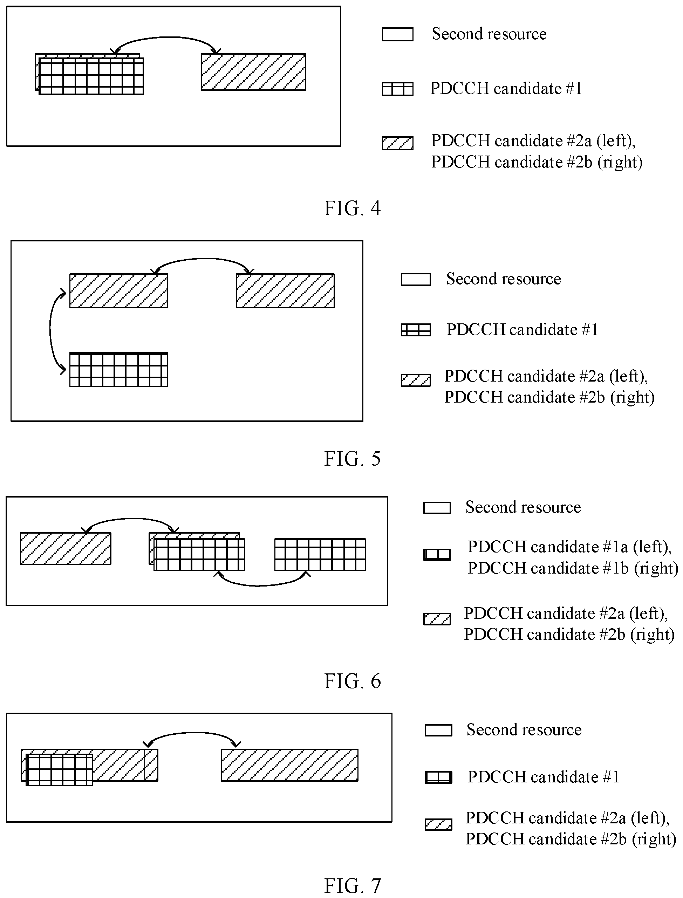

The terminal device determines that the target resource is a resource obtained by removing the second overlapping part from the second resource. With reference to FIG. 4 to FIG. 10, the following describes how a terminal device determines a target resource and receives a first PDSCH on the target resource.

For example, with reference to FIG. 4, for a PDCCH #1 that is independently transmitted (PDCCH repetition transmission is not configured), a first PDCCH candidate group in a PDCCH candidate set monitored by a terminal device includes a PDCCH candidate #1, and for a PDCCH #2a and a PDCCH #2b that are repeatedly transmitted twice, a second PDCCH candidate group in a PDCCH candidate set monitored by the terminal device includes a PDCCH candidate #2a and a PDCCH candidate #2b, and the PDCCH candidate #1 and the PDCCH candidate #2a meet the case #1 of the foregoing first condition. If the terminal device receives a first PDCCH on any PDCCH candidate in the PDCCH candidate set, and the first PDCCH indicates a second resource corresponding to the first PDSCH, the terminal device determines that a target resource is a resource obtained by removing the resources corresponding to the PDCCH candidate #1, the PDCCH candidate #2a, and the PDCCH candidate #2b from the second resource, and receives the first PDSCH on the target resource.

For example, with reference to FIG. 5, for a PDCCH #1 and a PDCCH #2a that are repeatedly transmitted twice, a first PDCCH candidate group in a PDCCH candidate set monitored by a terminal device includes a PDCCH candidate #1 and a PDCCH candidate #2a, and for a PDCCH #2a and a PDCCH #2b that are repeatedly transmitted twice, a second PDCCH candidate group in a PDCCH candidate set monitored by the terminal device includes a PDCCH candidate #2a and a PDCCH candidate #2b. This meets many-to-one or one-to-many mapping in the case #1 of the foregoing first condition. If the terminal device receives a first PDCCH on any PDCCH candidate in the PDCCH candidate set, and the first PDCCH indicates a second resource corresponding to a first PDSCH, the terminal device determines that a target resource is a resource obtained by removing the resources corresponding to the PDCCH candidate #1, the PDCCH candidate #2a, and the PDCCH candidate #2b from the second resource, and receives the first PDSCH on the target resource.

For example, with reference to FIG. 6, for a PDCCH#1a and a PDCCH #1b that are repeatedly transmitted twice, a first PDCCH candidate group in a PDCCH candidate set monitored by a terminal device includes a PDCCH #1a and a PDCCH #1b, and for a PDCCH #2a and a PDCCH #2b that are repeatedly transmitted twice, a second PDCCH candidate group in a PDCCH candidate set monitored by the terminal device includes a PDCCH candidate #2a and a PDCCH candidate #2b, and the PDCCH #1a and the PDCCH #2b meet the case #1 of the foregoing first condition. If the terminal device receives a first PDCCH on any PDCCH candidate in the PDCCH candidate set, and the first PDCCH indicates a second resource corresponding to the first PDSCH, the terminal device determines that a target resource is a resource obtained by removing the resources corresponding to the PDCCH #1a, the PDCCH #1b, the PDCCH candidate #2a, and the PDCCH candidate #2b from the second resource, and receives the first PDSCH on the target resource.

For example, with reference to FIG. 7, for a PDCCH #1 that is independently transmitted (PDCCH repetition transmission is not configured), a first PDCCH candidate group in a PDCCH candidate set monitored by a terminal device includes a PDCCH candidate #1, and for a PDCCH #2a and a PDCCH #2b that are repeatedly transmitted twice, a second PDCCH candidate group in a PDCCH candidate set monitored by the terminal device includes a PDCCH candidate #2a and a PDCCH candidate #2b. An aggregation level of the PDCCH candidate #1 is 8, and an aggregation level of the PDCCH candidate #2a is 16. The PDCCH candidate #1 and the PDCCH candidate #2a meet the case #1 of the foregoing first condition. If the terminal device receives a first PDCCH on any PDCCH candidate in the PDCCH candidate set, and the first PDCCH indicates a second resource corresponding to the first PDSCH, the terminal device determines that a target resource is a resource obtained by removing the resources corresponding to the PDCCH candidate #1, the PDCCH candidate #2a, and the PDCCH candidate #2b from the second resource, and receives the first PDSCH on the target resource.

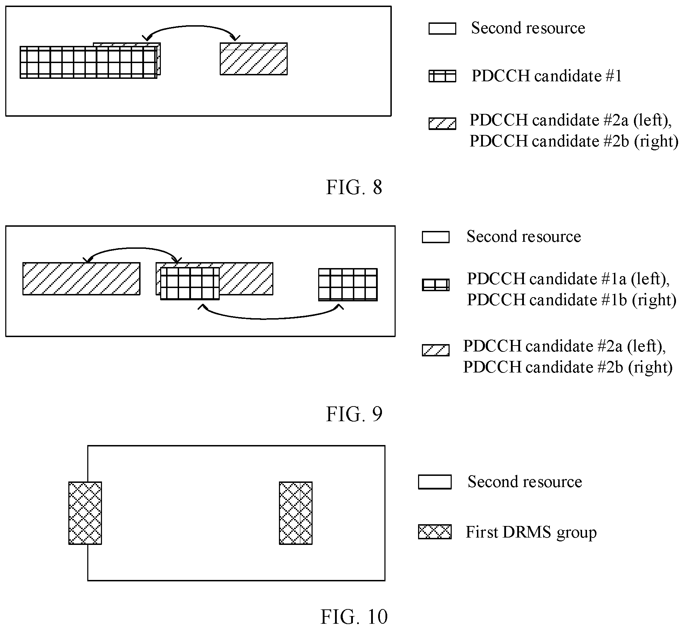

For example, with reference to FIG. 8, for a PDCCH #1 that is independently transmitted (PDCCH repetition transmission is not configured), a first PDCCH candidate group in a PDCCH candidate set monitored by a terminal device includes a PDCCH candidate #1, and for a PDCCH #2a and a PDCCH #2b that are repeatedly transmitted twice, a second PDCCH candidate group in a PDCCH candidate set monitored by the terminal device includes a PDCCH candidate #2a and a PDCCH candidate #2b. An aggregation level of the PDCCH candidate #1 is 16, and an aggregation level of the PDCCH candidate #2a is 8. The PDCCH candidate #1 and the PDCCH candidate #2a meet the case #1 of the foregoing first condition. If the terminal device receives a first PDCCH on any PDCCH candidate in the PDCCH candidate set, and the first PDCCH indicates a second resource corresponding to the first PDSCH, the terminal device determines that a target resource is a resource obtained by removing the resources corresponding to the PDCCH candidate #1, the PDCCH candidate #2a, and the PDCCH candidate #2b from the second resource, and receives the first PDSCH on the target resource.

For example, with reference to FIG. 9, for a PDCCH #1a and a PDCCH #1b that are repeatedly transmitted twice, a first PDCCH candidate group in a PDCCH candidate set monitored by the terminal device includes a PDCCH candidate #1a and a PDCCH candidate #1b, and for a PDCCH #2a and a PDCCH #2b that are repeatedly transmitted twice, a second PDCCH candidate group in a PDCCH candidate set monitored by the terminal device includes a PDCCH candidate #2a and a PDCCH candidate #2b. An aggregation level of the PDCCH candidate #1a is 8, and an aggregation level of the PDCCH candidate #2b is 16. The PDCCH candidate #1a and the PDCCH candidate #2b meet the case #2 of the foregoing first condition. If the terminal device receives a first PDCCH on any PDCCH candidate in the PDCCH candidate set, and the first PDCCH indicates a second resource corresponding to the first PDSCH, the terminal device determines that a target resource is a resource obtained by removing the resources corresponding to the PDCCH candidate #1a, the PDCCH candidate #1b, the PDCCH candidate #2a, and the PDCCH candidate #2b from the second resource, and receives the first PDSCH on the target resource.

For example, with reference to FIG. 10, when the terminal device further receives a first DMRS group, and a resource used by the first DMRS group and a second resource have a third overlapping part, a target resource is a resource obtained by removing a second overlapping part and the third overlapping part from the second resource. In other words, when receiving a PDSCH, the terminal device avoids a first resource and the resource used by the first DMRS group.

With reference to FIG. 4 to FIG. 10, the access network device sends a PDSCH to the terminal device on a target resource, and the terminal device receives, on the target resource, the PDSCH sent by the access network device, so that the access network device and the terminal device have a consistent understanding of a rate matching pattern used during PDSCH resource mapping.

The foregoing example is merely an example for description, and does not impose any limitation on this application.

In this application, when the first PDCCH candidate group and the second PDCCH candidate group received by the terminal device have overlapping PDCCH candidates, all PDCCH candidates, that may cause confusion, in the first PDCCH candidate group and the second PDCCH candidate group are considered, and when receiving a PDSCH, the terminal device avoids resources corresponding to all PDCCH candidates in the PDCCH candidate set, thereby improving PDSCH transmission reliability.

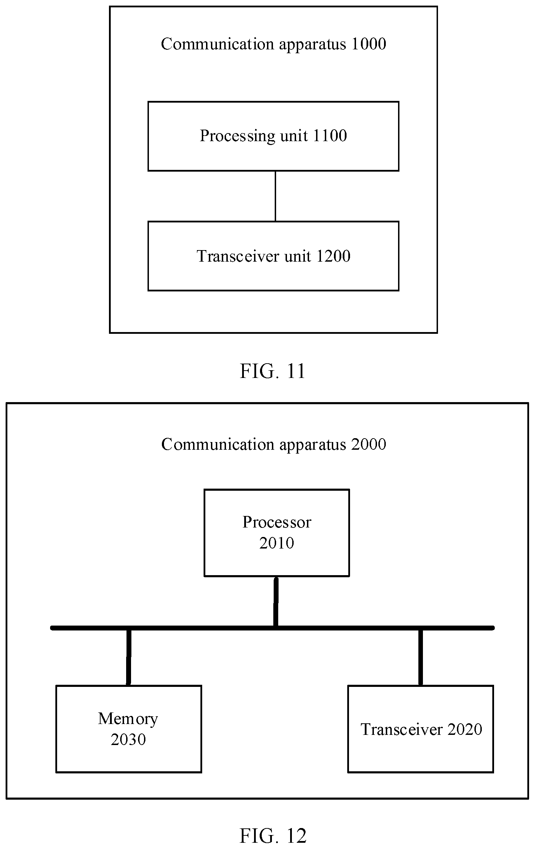

FIG. 11 is a schematic block diagram of a decoding apparatus according to an embodiment of this application. As shown in FIG. 11, an apparatus 1000 includes a processing unit 1100 and a transceiver unit 1200.

Optionally, the apparatus 1000 may correspond to the terminal device in the foregoing method embodiments, or a component (such as a circuit, a chip, or a chip system) configured in a terminal device.

It should be understood that the apparatus 1000 may correspond to the terminal device in the method according to the embodiments of this application, and the apparatus 1000 may include units configured to perform the method performed by the terminal device in FIG. 2. In addition, the units in the apparatus 1000 and the foregoing other operations and/or functions are separately intended to implement corresponding procedures in FIG. 2.

When the apparatus 1000 is used to perform the method in FIG. 2, the transceiver unit 1200 is used for: receiving configuration information of a physical downlink control channel (physical downlink control channel, PDCCH) candidate set, where the PDCCH candidate set is used to transmit a first PDCCH, the PDCCH candidate set corresponds to a first resource, the PDCCH candidate set includes a first PDCCH candidate group and a second PDCCH candidate group, the first PDCCH candidate group includes at least one first PDCCH candidate, the second PDCCH candidate group includes two or more second PDCCH candidates, and a resource corresponding to at least one target first PDCCH candidate in the first PDCCH candidate group and a resource corresponding to at least one target second PDCCH candidate in the second PDCCH candidate group have a first overlapping part; receiving a first PDCCH, where the first PDCCH is used to indicate a second resource available for a first physical downlink shared channel (physical downlink shared channel, PDSCH), and the first resource and the second resource have a second overlapping part; and receiving a first PDSCH on a target resource, where the target resource is a resource obtained by removing the second overlapping part from the second resource. It should be understood that a specific process in which the units perform the foregoing corresponding steps is described in detail in the foregoing method embodiments, and for brevity, details are not described herein.

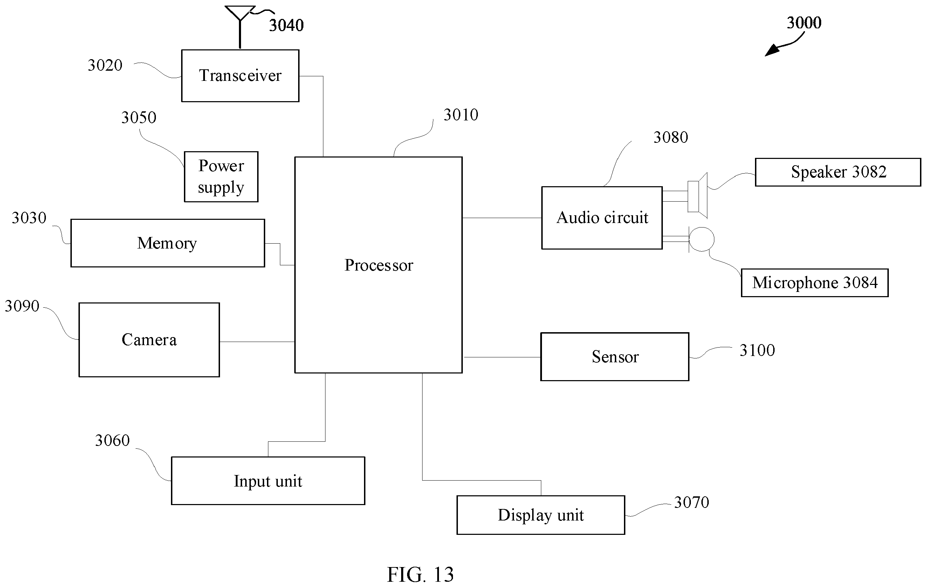

It should be further understood that, when the apparatus 1000 is a terminal device, the transceiver unit 1200 in the apparatus 1000 may be implemented through a transceiver, for example, may correspond to a transceiver 2020 in an apparatus 2000 shown in FIG. 12 or a transceiver 3020 in a terminal device 3000 shown in FIG. 13. The processing unit 1100 in the apparatus 1000 may be implemented through at least one processor, for example, may correspond to a processor 2010 in the apparatus 2000 shown in FIG. 12 or a processor 3010 in the terminal device 3000 shown in FIG. 13.

It should be further understood that, when the apparatus 1000 is a chip or a chip system configured in a terminal device, the transceiver unit 1200 in the apparatus 1000 may be implemented through an input/output interface, a circuit, or the like, and the processing unit 1100 in the apparatus 1000 may be implemented through a processor, a microprocessor, an integrated circuit, or the like integrated into the chip or the chip system.

It should be understood that the apparatus 1000 may correspond to the access network device in the method according to the embodiments of this application, and the apparatus 1000 may include units configured to perform the method performed by the access network device in FIG. 2. In addition, the units in the apparatus 1000 and the foregoing other operations and/or functions are separately intended to implement corresponding procedures in FIG. 2.

When the apparatus 1000 is used to perform the method in FIG. 2, the transceiver unit 1200 is used for: sending configuration information of a PDCCH candidate set, where the PDCCH candidate set is used to transmit a first PDCCH, the PDCCH candidate set corresponds to a first resource, the PDCCH candidate set includes a first PDCCH candidate group and a second PDCCH candidate group, the first PDCCH candidate group includes at least one first PDCCH candidate, the second PDCCH candidate group includes two or more second PDCCH candidates, and a resource corresponding to at least one target first PDCCH candidate in the first PDCCH candidate group and a resource corresponding to at least one target second PDCCH candidate in the second PDCCH candidate group have a first overlapping part; sending a first PDCCH, where the first PDCCH is used to indicate a second resource available for a first physical downlink shared channel (physical downlink shared channel, PDSCH), and the first resource and the second resource have a second overlapping part; and sending a PDSCH on a target resource, where the target resource is a resource obtained by removing the second overlapping part from the second resource. It should be understood that a specific process in which the units perform the foregoing corresponding steps is described in detail in the foregoing method embodiments, and for brevity, details are not described herein.

It should be further understood that, when the apparatus 1000 is an access network device, the transceiver unit 1200 in the apparatus 1000 may be implemented through a transceiver, for example, may correspond to the transceiver 2020 in the apparatus 2000 shown in FIG. 12 or a transceiver 3020 in an access network device 3000 shown in FIG. 13. The processing unit 1100 in the apparatus 1000 may be implemented through at least one processor, for example, may correspond to the processor 2010 in the apparatus 2000 shown in FIG. 12 or a processor 3010 in the access network device 3000 shown in FIG. 13.

It should be further understood that, when the apparatus 1000 is a chip or a chip system configured in an access network device, the transceiver unit 1200 in the apparatus 1000 may be implemented through an input/output interface, a circuit, or the like, and the processing unit 1100 in the apparatus 1000 may be implemented through a processor, a microprocessor, an integrated circuit, or the like integrated into the chip or the chip system.

FIG. 12 is another schematic block diagram of the apparatus 2000 according to an embodiment of this application. As shown in FIG. 12, the apparatus 2000 includes the processor 2010, the transceiver 2020, and a memory 2030. The processor 2010, the transceiver 2020, and the memory 2030 communicate with each other by using an internal connection path. The memory 2030 is used to store instructions. The processor 2010 is used to execute the instructions stored in the memory 2030, so as to control the transceiver 2020 to send a signal and/or receive a signal. Optionally, the processor 2010 and the memory 2030 may be integrated together.

It should be understood that the apparatus 2000 may correspond to the access network device or the terminal device in the foregoing method embodiments, and may be used to perform each step and/or procedure performed by the access network device or the terminal device in the foregoing method embodiment. Optionally, the memory 2030 may include a read-only memory and a random access memory, and provide instructions and data to the processor. A part of the memory may further include a non-volatile random access memory. The memory 2030 may be an independent component, or may be integrated into the processor 2010. The processor 2010 may be used to execute instructions stored in the memory 2030. In addition, when the processor 2010 executes the instructions stored in the memory, the processor 2010 is used to perform steps and/or procedures corresponding to the access network device or the terminal device in the foregoing method embodiments.

Optionally, the apparatus 2000 is the terminal device in the foregoing embodiments.

Optionally, the apparatus 2000 is the access network device in the foregoing embodiments.

The transceiver 2020 may include a transmitter and a receiver. The transceiver 2020 may further include an antenna. There may be one or more antennas. The processor 2010, the memory 2030, and the transceiver 2020 may be components integrated into different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated into a same chip. This is not limited in this application.

Optionally, the apparatus 2000 is a component configured in a terminal device, for example, a circuit, a chip, or a chip system.

Optionally, the apparatus 2000 is a component configured in an access network device, such as a circuit, a chip, or a chip system.

Alternatively, the transceiver 2020 may be a communication interface, for example, an input/output interface or a circuit. The transceiver 2020, the processor 2010, and the memory 2030 may be integrated into a same chip, for example, integrated into a baseband chip.

FIG. 13 is a schematic diagram of a structure of the terminal device 3000 according to an embodiment of this application. The terminal device 3000 may be used in the system shown in FIG. 1, and performs a function of the terminal device in the foregoing method embodiments. As shown in FIG. 13, the terminal device 3000 includes the processor 3010 and the transceiver 3020. Optionally, the terminal device 3000 further includes a memory 3030. The processor 3010, the transceiver 3020, and the memory 3030 may communicate with each other by using an internal connection path, to transfer a control signal and/or a data signal. The memory 3030 is used to store a computer program. The processor 3010 is used to invoke the computer program from the memory 3030 and run the computer program, so as to control the transceiver 3020 to send and receive a signal. Optionally, the terminal device 3000 may further include an antenna 3040, used to send, by using a radio signal, uplink data or uplink control signaling output by the transceiver 3020.

The processor 3010 and the memory 3030 may be integrated into one processing apparatus. The processor 3010 is used to execute program code stored in the memory 3030, so as to implement the foregoing function. During specific implementation, the memory 3030 may alternatively be integrated into the processor 3010, or may be independent of the processor 3010. The processor 3010 may correspond to the processing unit 1100 in FIG. 11 or the processor 2010 in FIG. 12.

The transceiver 3020 may correspond to the transceiver unit 1200 in FIG. 11 or the transceiver 2020 in FIG. 12. The transceiver 3020 may include a receiver (or referred to as a receiver machine or a receiver circuit) and a transmitter (or referred to as a transmitter machine or a transmitter circuit). The receiver is used to receive a signal, and the transmitter is used to transmit a signal.

It should be understood that, the terminal device 3000 shown in FIG. 13 can implement each process performed by the terminal device in the method embodiment shown in FIG. 2. Operations and/or functions of the modules in the terminal device 3000 are separately intended to implement corresponding procedures in the foregoing method embodiments. For details, refer to the descriptions in the foregoing method embodiments. To avoid repetition, detailed descriptions are properly omitted herein.

The processor 3010 may be used to perform an action that is implemented inside the terminal device and that is described in the foregoing method embodiments, and the transceiver 3020 may be used to perform an action of sending or receiving that is performed by the terminal device to or from the access network device and that is described in the foregoing method embodiments. For details, refer to the descriptions in the foregoing method embodiments. Details are not described herein again.

Optionally, the terminal device 3000 may further include a power supply 3050, used to supply power to various components or circuits in the terminal device.

In addition, to improve functions of a terminal device, the terminal device 3000 may further include one or more of an input unit 3060, a display unit 3070, an audio circuit 3080, a camera 3090, a sensor 3100, and the like. The audio circuit may further include a speaker 3082, a microphone 3084, and the like.

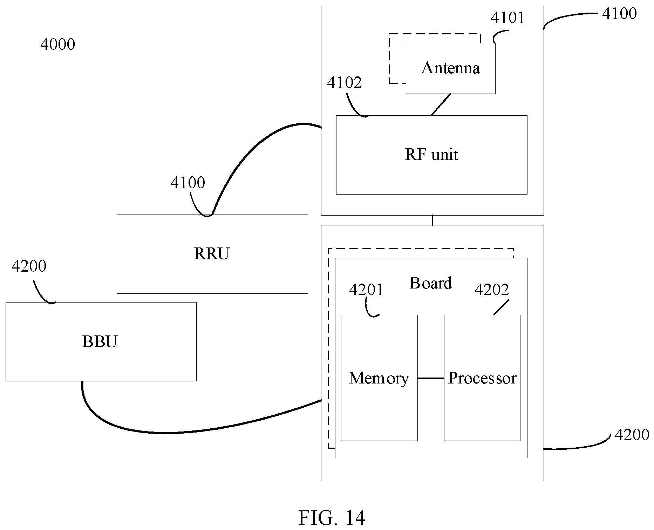

FIG. 14 is a schematic diagram of a structure of an access network device according to an embodiment of this application. For example, FIG. 14 may be a schematic diagram of a structure of a base station. A base station 4000 may be used in the system shown in FIG. 1, to perform functions of the access network device in the foregoing method embodiments. As shown in the figure, the base station 4000 may include one or more radio frequency units, such as a remote radio unit (remote radio unit, RRU) 4100 and one or more baseband units (baseband unit, BBU) 4200. An RRU 4100 may be referred to as a transceiver unit, and may correspond to the transceiver unit 1200 in FIG. 11 or the transceiver 2020 in FIG. 12. Optionally, the RRU 4100 may also be referred to as a transceiver machine, a transceiver circuit, a transceiver, or the like, and may include at least one antenna 4101 and one radio frequency unit 4102. Optionally, the RRU 4100 may include a receiving unit and a sending unit. The receiving unit may correspond to a receiver (which is also referred to as a receiver machine or a receiver circuit), and the sending unit may correspond to a transmitter (which is also referred to as a transmitter machine or a transmitter circuit). The RRU 4100 is mainly used to: receive and send a radio frequency signal, and perform conversion between the radio frequency signal and a baseband signal. For example, the RRU 4100 is used to send indication information to a terminal device. The BBU 4200 is mainly used to: perform baseband processing, control the base station, and so on. The RRU 4100 and the BBU 4200 may be physically disposed together, or may be physically disposed separately to form a distributed base station.

The BBU 4200 is a control center of the base station, may also be referred to as a processing unit, may correspond to the processing unit 1100 in FIG. 11 or the processor 2010 in FIG. 12, and is mainly used to complete baseband processing functions such as channel coding, multiplexing, modulation, and spectrum spreading. For example, the BBU (the processing module) may be used to control the base station to perform an operation procedure related to the access network device in the foregoing method embodiments, for example, generate the indication information.

In an example, the BBU 4200 may include one or more boards, and a plurality of boards may jointly support a radio access network (for example, a 5G network) having a single access standard, or may separately support radio access networks (for example, an LTE network, the 5G network, or another network) having different access standards. The BBU 4200 further includes a memory 4201 and a processor 4202. The memory 4201 is used to store necessary instructions and data. The processor 4202 is used to control the base station to perform a necessary action, for example, used to control the base station to perform an operation process related to the access network device in the method embodiments. The memory 4201 and the processor 4202 may serve one or more boards. In other words, a memory and a processor may be disposed on each board. Alternatively, a plurality of boards may share a same memory and a same processor. In addition, a necessary circuit may further be disposed on each board.

It should be understood that the base station 4000 shown in FIG. 14 can implement each process performed by the access network device in the method embodiment. The operations and/or the functions of the modules in the base station 4000 are separately intended to implement corresponding procedures in the foregoing method embodiments. For details, refer to the descriptions in the foregoing method embodiments. To avoid repetition, detailed descriptions are properly omitted herein.

The BBU 4200 may be used to perform an action implemented inside the access network device in the foregoing method embodiments, and the RRU 4100 may be used to perform an action of sending by the access network device to the terminal device or receiving from the terminal device in the foregoing method embodiments. For details, refer to the descriptions in the foregoing method embodiments. Details are not described herein again.

It should be understood that the base station 4000 shown in FIG. 14 is merely a possible form of an access network device, and shall not constitute any limitation on this application. The method provided in this application may be applicable to an access network device in another form. For example, the access network device includes an AAU, and may further include a CU and/or a DU, or include a BBU and an adaptive radio unit (adaptive radio unit, ARU), or a BBU; or may be a customer premises equipment (customer premises equipment, CPE), or may be in another form. A specific form of the access network device is not limited in this application.

The CU and/or DU may be used to perform an action implemented inside the access network device in the foregoing method embodiments, and the AAU may be used to perform an action of sending by the access network device to the terminal device or receiving from the terminal device in the foregoing method embodiments. For details, refer to the descriptions in the foregoing method embodiments. Details are not described herein again.

This application further provides a processing apparatus, including at least one processor. The at least one processor is used to execute a computer program stored in a memory, so that the processing apparatus performs the method performed by the terminal device or the network device in any one of the foregoing method embodiments.

An embodiment of this application further provides a processing apparatus, including a processor and a communication interface. The communication interface is coupled to the processor. The communication interface is used to input and/or output information. The information includes at least one of instructions and data. The processor is used to execute a computer program, so that the processing apparatus performs the method performed by the terminal device or the access network device in any one of the foregoing method embodiments.

An embodiment of this application further provides a processing apparatus, including a processor and a memory. The memory is used to store a computer program, and the processor is used to invoke the computer program from the memory and run the computer program, so as to enable the processing apparatus to perform the method performed by the terminal device or the network device in any one of the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing (digital signal processing, DSP) circuit, a micro controller unit (micro controller unit, MCU), a programmable logic device (programmable logic device, PLD), or another integrated chip.

In an implementation process, steps in the foregoing methods can be implemented through a hardware integrated logical circuit in the processor, or through instructions in a form of software. The steps of the method disclosed with reference to embodiments of this application may be directly performed by a hardware processor, or may be performed through a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented through a hardware integrated logical circuit in the processor, or through instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method performed by the terminal device or the method performed by the network device in the embodiment shown in FIG. 3.

According to the method provided in embodiments of this application, this application further provides a computer-readable storage medium. The computer readable storage medium stores program code. When the program code is run on a computer, the computer is enabled to perform the method performed by the terminal device or the method performed by the network device in the embodiment shown in FIG. 3.

According to the method provided in embodiments of this application, this application further provides a system. The system includes the foregoing one or more terminal devices and the foregoing one or more network devices.

The network device and the terminal device in the foregoing apparatus embodiments completely correspond to the network device and the terminal device in the method embodiments. A corresponding module or unit performs a corresponding step. For example, a communication unit (a transceiver) performs a receiving or sending step in the method embodiments, and a step other than the sending step and the receiving step may be performed by a processing unit (a processor). For a function of a specific unit, refer to a corresponding method embodiment. There may be one or more processors.

In the foregoing embodiments, the terminal device may be used as an example of a receiving device, and the network device may be used as an example of a sending device. However, this shall not constitute any limitation on this application. For example, both the sending device and the receiving device may be terminal devices. Specific types of the sending device and the receiving device are not limited in this application.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource determining method, wherein the method comprises:
receiving configuration information of a physical downlink control channel PDCCH candidate set, wherein the PDCCH candidate set is for transmitting a first PDCCH, the PDCCH candidate set corresponds to a first resource, the PDCCH candidate set comprises a first PDCCH candidate group and a second PDCCH candidate group, the first PDCCH candidate group comprises at least one first PDCCH candidate, the second PDCCH candidate group comprises two or more second PDCCH candidates, and a resource corresponding to at least one target first PDCCH candidate in the first PDCCH candidate group and a resource corresponding to at least one target second PDCCH candidate in the second PDCCH candidate group have a first overlapping part;
receiving the first PDCCH, wherein the first PDCCH indicates a second resource available for a first physical downlink shared channel PDSCH, and the first resource and the second resource have a second overlapping part; and
receiving the first PDSCH on a target resource, wherein the target resource is a resource obtained by removing the second overlapping part from the second resource.

2. The method according to claim 1, wherein the method further comprises:
receiving a first demodulation reference signal DMRS group, wherein a resource used by the first DMRS group and the second resource have a third overlapping part; and
that the target resource is a resource obtained by removing the second overlapping part from the second resource comprises: the target resource is a resource obtained by removing the second overlapping part and the third overlapping part from the second resource.

3. The method according to claim 2, wherein the first DMRS group refers to DMRSs corresponding to the PDCCH candidate set.

4. The method according to any one of claims 1 to 3, wherein the at least one target first PDCCH candidate and the at least one target second PDCCH candidate meet a first condition, and the first condition comprises: having a same start control channel element CCE location, and carrying downlink control information DCI of a same size or a same format.

5. The method according to claim 4, wherein the first condition further comprises: corresponding to a same CCE, corresponding to a same control resource set CORESET, and having a same scrambling code sequence.

6. The method according to claim 4, wherein the first condition further comprises: corresponding to a same CORESET, or having a same scrambling code sequence.

7. The method according to claim 6, wherein an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

8. The method according to any one of claims 1 to 7, wherein the two or more second PDCCH candidates are for transmitting same DCI.

9. The method according to any one of claims 1 to 8, wherein the first PDCCH candidate group comprises two or more first PDCCH candidates for transmitting same DCI.

10. A resource determining method, wherein the method comprises:
sending configuration information of a physical downlink control channel PDCCH candidate set, wherein the PDCCH candidate set is for transmitting a first PDCCH, the PDCCH candidate set corresponds to a first resource, the PDCCH candidate set comprises a first PDCCH candidate group and a second PDCCH candidate group, the first PDCCH candidate group comprises at least one first PDCCH candidate, the second PDCCH candidate group comprises two or more second PDCCH candidates, and a resource corresponding to at least one target first PDCCH candidate in the first PDCCH candidate group and a resource corresponding to at least one target second PDCCH candidate in the second PDCCH candidate group have a first overlapping part;
sending the first PDCCH, wherein the first PDCCH indicates a second resource available for a first physical downlink shared channel PDSCH, and the first resource and the second resource have a second overlapping part; and
sending the PDSCH on a target resource, wherein the target resource is a resource obtained by removing the second overlapping part from the second resource.

11. The method according to claim 10, wherein the method further comprises:
sending a first demodulation reference signal DMRS group, wherein a resource used by the first DMRS group and the second resource have a third overlapping part; and
that the target resource is a resource obtained by removing the second overlapping part from the second resource comprises: the target resource is a resource obtained by removing the second overlapping part and the third overlapping part from the second resource.

12. The method according to claim 11, wherein the first DMRS group refers to DMRSs corresponding to the PDCCH candidate set.

13. The method according to any one of claims 10 to 12, wherein the at least one target first PDCCH candidate and the at least one target second PDCCH candidate meet a first condition, and the first condition comprises: having a same start control channel element CCE location, and carrying downlink control information DCI of a same size or a same format.

14. The method according to claim 13, wherein the first condition further comprises: corresponding to a same CCE, corresponding to a same control resource set CORESET, and having a same scrambling code sequence.

15. The method according to claim 13, wherein the first condition further comprises: corresponding to a same CORESET, or having a same scrambling code sequence.

16. The method according to claim 15, wherein an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

17. The method according to any one of claims 10 to 16, wherein the two or more second PDCCH candidates are for transmitting same DCI.

18. The method according to any one of claims 10 to 17, wherein the first PDCCH candidate group comprises two or more first PDCCH candidates for transmitting same DCI.

19. A resource determining apparatus, wherein the apparatus comprises:
a transceiver unit is configured to receive configuration information of a physical downlink control channel PDCCH candidate set, wherein the PDCCH candidate set is for transmitting a first PDCCH, the PDCCH candidate set corresponds to a first resource, the PDCCH candidate set comprises a first PDCCH candidate group and a second PDCCH candidate group, the first PDCCH candidate group comprises at least one first PDCCH candidate, the second PDCCH candidate group comprises two or more second PDCCH candidates, and a resource corresponding to at least one target first PDCCH candidate in the first PDCCH candidate group and a resource corresponding to at least one target second PDCCH candidate in the second PDCCH candidate group have a first overlapping part;
the transceiver unit is further configured to receive the first PDCCH, wherein the first PDCCH indicates a second resource available for a first physical downlink shared channel PDSCH, and the first resource and the second resource have a second overlapping part; and
the transceiver unit is further configured to receive the first PDSCH on a target resource, wherein the target resource is a resource obtained by removing the second overlapping part from the second resource.

20. The apparatus according to claim 19, wherein
the transceiver unit is further configured to receive a first demodulation reference signal DMRS group, wherein a resource used by the first DMRS group and the second resource have a third overlapping part; and
that the target resource is a resource obtained by removing the second overlapping part from the second resource comprises: the target resource is a resource obtained by removing the second overlapping part and the third overlapping part from the second resource.

21. The apparatus according to claim 20, wherein the first DMRS group refers to DMRSs corresponding to the PDCCH candidate set.

22. The apparatus according to any one of claims 19 to 21, wherein the at least one target first PDCCH candidate and the at least one target second PDCCH candidate meet a first condition, and the first condition comprises: having a same start control channel element CCE location, and carrying downlink control information DCI of a same size or a same format.

23. The apparatus according to claim 22, wherein the first condition further comprises: corresponding to a same CCE, corresponding to a same control resource set CORESET, and having a same scrambling code sequence.

24. The apparatus according to claim 22, wherein the first condition further comprises: corresponding to a same CORESET, or having a same scrambling code sequence.

25. The apparatus according to claim 24, wherein an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

26. The apparatus according to any one of claims 19 to 25, wherein the two or more second PDCCH candidates are for transmitting same DCI.

27. The apparatus according to any one of claims 19 to 26, wherein the first PDCCH candidate group comprises two or more first PDCCH candidates for transmitting same DCI.

28. A resource determining apparatus, wherein the apparatus comprises:
a transceiver unit is configured to send configuration information of a physical downlink control channel PDCCH candidate set, wherein the PDCCH candidate set is for transmitting a first PDCCH, the PDCCH candidate set corresponds to a first resource, the PDCCH candidate set comprises a first PDCCH candidate group and a second PDCCH candidate group, the first PDCCH candidate group comprises at least one first PDCCH candidate, the second PDCCH candidate group comprises two or more second PDCCH candidates, and a resource corresponding to at least one target first PDCCH candidate in the first PDCCH candidate group and a resource corresponding to at least one target second PDCCH candidate in the second PDCCH candidate group have a first overlapping part;
the transceiver unit is further configured to send the first PDCCH, wherein the first PDCCH indicates a second resource available for a first physical downlink shared channel PDSCH, and the first resource and the second resource have a second overlapping part; and
the transceiver unit is further configured to send the PDSCH on a target resource, wherein the target resource is a resource obtained by removing the second overlapping part from the second resource.

29. The apparatus according to claim 28, wherein
the transceiver unit is further configured to send a first demodulation reference signal DMRS group, wherein a resource used by the first DMRS group and the second resource have a third overlapping part; and
that the target resource is a resource obtained by removing the second overlapping part from the second resource comprises: the target resource is a resource obtained by removing the second overlapping part and the third overlapping part from the second resource.

30. The apparatus according to claim 29, wherein the first DMRS group refers to DMRSs corresponding to the PDCCH candidate set.

31. The apparatus according to any one of claims 28 to 30, wherein the at least one target first PDCCH candidate and the at least one target second PDCCH candidate meet a first condition, and the first condition comprises: having a same start control channel element CCE location, and carrying downlink control information DCI of a same size or a same format.

32. The apparatus according to claim 31, wherein the first condition further comprises: corresponding to a same CCE, corresponding to a same control resource set CORESET, and having a same scrambling code sequence.

33. The apparatus according to claim 31, wherein the first condition further comprises: corresponding to a same CORESET, or having a same scrambling code sequence.

34. The apparatus according to claim 33, wherein an aggregation level of the target first PDCCH candidate is 8, and an aggregation level of the target second PDCCH candidate is 16; or an aggregation level of the target first PDCCH candidate is 16, and an aggregation level of the target second PDCCH candidate is 8.

35. The apparatus according to any one of claims 28 to 34, wherein the two or more second PDCCH candidates are for transmitting same DCI.

36. The apparatus according to any one of claims 28 to 35, wherein the first PDCCH candidate group comprises two or more first PDCCH candidates for transmitting same DCI.

37. A communication apparatus, wherein the communication apparatus comprises at least one processor, the at least one processor is configured to execute a computer program stored in a memory, so that the apparatus implements the method according to any one of claims 1 to 9.

38. A communication apparatus, wherein the communication apparatus comprises at least one processor, and the at least one processor is configured to execute a computer program stored in a memory, so that the apparatus implements the method according to any one of claims 10 to 18.

39. A computer-readable storage medium, wherein the computer-readable storage medium comprises a computer program, and when the computer program is run on a computer, the computer is enabled to perform the method according to any one of claims 1 to 9.

40. A computer-readable storage medium, wherein the computer-readable storage medium comprises a computer program, and when the computer program is run on a computer, the computer is enabled to perform the method according to any one of claims 10 to 18.

41. A computer program product, wherein when the computer program product is run on a computer, the computer is enabled to perform the method according to any one of claims 1 to 9.

42. A computer program product, wherein when the computer program product is run on a computer, the computer is enabled to perform the method according to any one of claims 10 to 18.

43. A chip system, wherein the chip system comprises a processor, and the processor is configured to invoke a computer program from a memory and run the computer program, so that a communication device equipped with the chip system performs the method according to any one of claims 1 to 9.

44. A chip system, wherein the chip system comprises a processor, and the processor is configured to invoke a computer program from a memory and run the computer program, so that a communication device equipped with the chip system performs the method according to any one of claims 10 to 18.

45. A communication apparatus, wherein the apparatus is configured to perform the method according to any one of claims 1 to 9.

46. A communication apparatus, wherein the apparatus is configured to perform the method according to any one of claims 10 to 18.
